# NOUVEAU FASCICULE DE BREVET EUROPEEN

(11) **EP 0 122 163 B2**
(45) Date de publication et mention de la décision concernant l'opposition: **01.05.1996**
(45) Mention de la délivrance du brevet: 02.09.1987
(21) Numéro de dépôt: 84400410.1
(22) Date de dépôt: 01.03.1984
(51) Int. Cl.: A23K 1/16, C12P 13/08

(54) **Procédé de préparation de compositions pour alimentation animale à base de lysine**
Verfahren zur Herstellung von Zusammensetzungen auf Basis von Lysin zur Tierfütterung
Process for preparing lysin-containing animal feed compositions

(30) Priorité: 03.03.1983 FR 8303487
(43) Date de publication de la demande: 17.10.1984
(73) Titulaire: RHONE-POULENC NUTRITION ANIMALE, F-03600 Commentry (FR)
(72) Inventeur: Rouy, Noel, 91330 Yerres (FR)
(74) Mandataire: Zumstein, Fritz, Dr.

(56) Documents cités:
- DE-B- 2 321 461
- FR-A- 2 217 347
- FR-A- 2 225 516
- FR-A- 2 464 032
- JP-A- 7 431 794
- CHEMICAL ABSTRACTS, vol. 93, no. 15, 13 octobre 1980, page 573, no. 148451p, Columbus, Ohio, USA; E. BELIK et al.: "Production of feed supplements containing commercial lysine from a thickened eluate and evaluation of its stability"
- CHEMICAL ABSTRACTS, vol. 82, no. 21, 26 mai 1975, page 441, no. 137644a, Columbus, Ohio, USA; M. BEKERS et al.: "Technological principles of microbiological production of an L-lysine feed concentrate"
- CHEMICAL ABSTRACTS, vol. 83, no. 9, 1 septembre 1975, page 531, no. 77368x, Columbus, Ohio, USA; GH. URMA et al.: "Use of L-lysine from a nonacidified medium as feed for pigs"

## Description

La présente invention concerne un procédé de préparation d'une nouvelle composition pour alimentation animale à base de lysine.

La lysine est un aminoacide essentiel pour les animaux monogastriques qui est utilisé en particulier dans l'alimentation animale.

La lysine peut être préparée soit par voie chimique soit par voie biochimique. Bien que les procédés biochimiques soient économiquement plus intéressants que les procédés chimiques, l'extraction de la lysine s'effectue avec des rendements relativement peu élevés et nécessite des installations particulières et l'utilisation de produits coûteux.

La lysine, lorsqu'elle est destinée à l'alimentation animale, est mélangée à des aliments divers, tels que des céréales, dont la composition est assez mal définie. Dans ces conditions l'utilisation de lysine purifiée ne paraît pas nécessaire.

Il a été montré que les moûts concentrés de fermentations productrices de lysine possèdent les mêmes propriétés nutritives que la lysine purifiée. La biomasse et les différents constituants du milieu de fermentation nécessaires à la production de lysine ou leurs produits dérivés n'ont aucun effet néfaste sur les animaux. Cependant, ces moûts, une fois concentrés de manière à atteindre une teneur suffisante en lysine pour l'emploi considéré, sont des liquides visqueux dont le mélange avec des aliments pour animaux peut présenter des difficultés.

Les moûts de fermentation totalement déshydratés conduisent à des solides pâteux, collants et très hygroscopiques, qui sont de ce fait difficilement manipulables.

Il a été proposé, en particulier dans le brevet SU 480 397 et dans le brevet FR 73 40738 publié sous le numéro 2 17 347, de préparer des compositions solides obtenues à partir de moûts concentrés de fermentation de lysine auxquels sont ajoutés éventuellement des produits déshydratants. Ces compositions ne présentent pas toujours la qualité requise, sont souvent hygroscopiques ou bien nécessitent l'emploi d'un additif en quantité telle que la teneur en lysine dans la composition finale est trop faible.

Il a été aussi proposé, en particulier dans le brevet FR 79 21646 publié sous le numéro 2 464 032, d'obtenir une composition stable, solide, facilement manipulable, ne prenant pas en masse en présence d'humidité et contenant 10 à 35 % de lysine en ajoutant à un moût concentré de fermentation productrice de lysine un additif choisi parmi la chaux en présence de gaz carbonique ou le carbonate de magnésium précipité. Ces compositions ont des teneurs en lysine relativement faibles et des teneurs élevées en additif.

Dans la demande de brevet japonais JP 31794/74 a été décrit un procédé de préparation d'une composition solide ayant une forte teneur en lysine par déshydratation d'un moût de fermentation obtenu par culture d'un microorganisme dans un milieu contenant de l'acide acétique comme source principale de carbone.

Il a maintenant été trouvé, et c'est ce qui fait l'objet de la présente invention, qu'à partir d'un moût concentré issu de la culture dans des conditions bien définies d'un microorganisme producteur de lysine il est possible d'obtenir industriellement et de façon reproductible une composition ayant une forte teneur en lysine et qui présente les caractéristiques requises pour l'utilisation dans l'alimentation animale.

Les propriétés de la composition préparée selon le procédé de l'invention sont les suivantes:
- teneur élevée en lysine qui, exprimée en lysine base, est généralement comprise entre 35 et 48 % en poids
- résistance à l'air humide, même dans des conditions plus défavorables que celles rencontrées habituellement dans son utilisation, sans altération notable des propriétés mécaniques, en particulier, en ce qui concerne la formation de mottes ou d'agglomérats ou l'apparition d'un phénomène de collage. Ainsi, abandonné pendant 120 heures à 25°C dans une atmosphére à 90 % d'humidité relative, la reprise en eau du produit est généralement comprise entre 5 et 10 % et est équivalente à celle du chlorhydrate de lysine cristallisé. Dans une atmosphére à 70 % d'humidité relative, la reprise en eau reste généralement comprise entre 2 et 5 %
- stabilité au stockage du produit tel quel. La diminution de la teneur en lysine n'excède pas 5 % après un mois de conservation à 50°C et elle est nulle après 6 mois de conservation à 25°C
- propriétés physiques, déterminées par les méthodes habituelles, telles que:
   a) coulabilité déterminée soit par le test des sabliers à orifices calibrés (le temps d'écoulement pour 50 g de produit est compris entre 40 et 45 secondes dans un sablier ayant une ouverture de 5 mm de diamètre), soit par le test de l'angle de talus qui est habituellement compris entre 30 et 35°, soit par le test de l'angle de plan incliné qui est généralement compris entre 28 et 30°
   b) absence de tendance à l'agglomération dans le test de "mottage" au compressomètre
- aptitude au mélangeage dans des aliments complets et dans les prémixes préparés pour l'alimentation des animaux. L'homogénéité d'incorporation est mesurée par la dispersion des taux mesurés qui est habituellement inférieure à 5 % quelles que soient les doses de supplémentation en lysine, exprimées en lysine de base, qui peuvent varier de 0,05 à 20 %
- stabilité dans les aliments complets et/ou prémixes après incorporation du produit: après 2 mois de conservation à des températures pouvant atteindre 50°C, la diminution de la teneur en lysine est généralement inférieure à 10 % et aucune diminution du titre n'est observée après 6 mois de stockage à 25°C.

Généralement, une composition préparée selon le procédé de l'invention peut être définie de la manière suivante:
- poudre fine beige rosé à brun
- densité apparente comprise entre 0,4 et 0,6
- composition centésimale:

| | |
|---|---|
| - matière sèche | 95 à 98 % |
| - lysine (exprimée en base) | 35 à 48 % |
| - protéines | 10 à 15 %(1) |
| - acides aminés libres totaux autres que la lysine | 1 à 3 %(2) |
| - acide lactique | 0,5 à 3 %(3) |
| - autres acides dont le nombre d'atomes de carbone est inférieur à 8 | 2 à 10 %(3) |
| - polysaccharides, oligosaccharides | 2 à 7 %(4) |
| - matières grasses, huiles | 1 à 6 %(5) |
| - eau | 0,5 à 3 % |
| - matières minérales | 10 à 25 %(6) |

| | |
|---|---|
| (1) La teneur en protéines est déterminée à partir de la teneur en azote organique déterminée elle-même selon les méthodes classiques (azote total moins azote minéral). On déduit la teneur en azote correspondant à la lysine et aux autres acides aminés libres qui sont déterminés et dosés par chromatographie sur résine échangeuse d'ions ou par colorimétrie. | |
| (2) Dosage sur appareil BIOTRONIC | |
| (3) Dosage par chromatographie en phase gazeuse après dérivatisation | |
| (4) Dosage des sucres réducteurs après hydrolyse | |
| (5) Dosage après extraction par l'éther éthylique | |
| (6) Dosage des cendres sulfuriques. Les charges minérales proviennent des constituants du milieu de fermentation et de la salification de la lysine au fur et à mesure de sa formation. | |

Compte tenu des variations dans la composition des substrats carbonés utilisés dans le milieu de fermentation et des fluctuations inhérentes à tout procédé de fermentation, les caractéristiques d'une composition préparée selon le procédé de l'invention peuvent s'écarter des valeurs données ci-dessus.

Selon le procédé de l'invention, la composition peut être obtenue à partir d'un moût de fermentation productrice de lysine.

La lysine est produite par culture d'un microorganisme, ayant une forte productivité en lysine, appartenant, par exemple, au genre Brevibacterium ou Corynebacterium dans un milieu approprié contenant au moins une source de carbone et une source d'azote assimilables et des sels minéraux à une température comprise entre 25 et 40°C et à un pH compris entre 5 et 8. Habituellement, les sources de carbone et d'azote sont des mélanges complexes tels que les mélasses de betterave ou de canne à sucre, les extraits de maïs ou les hydrolysats de farine de soja. En utilisant de tels milieux, les moûts concentrés après déshydratation ultérieure conduisent à des produits ne présentant pas les qualités requises.

Il a été trouvé que, pour l'obtention du résultat recherché, il est nécessaire que les milieux de culture, milieu inoculum et milieu de production, contiennent des constituants moins complexes dont la teneur et la qualité sont facilement contrôlables.

Le procédé selon la présente invention consiste à effectuer la culture d'un microorganisme producteur de lysine dans un milieu qui contient au moins une source de carbone assimilable choisie parmi le glucose, le saccharose, les hydrolysats d'amidon et les produits introduisant une matière carbonée oxygénée assimilable, telle que le rapport pondéral matières fermentescibles/matières sèches totales est supérieur à 80 %, à l'exclusion de l'acide acétique utilisé seul ou en mélange, et une source d'azote assimilable, en maintenant la concentration de la source de carbone comprise entre 5 et 15 g/litre et la concentration en ions ammonium comprise entre 1 et 5 g/litre, en opérant à un pH voisin de 7,3 et en salifiant la lysine sous forme de sulfate au fur et à mesure de sa formation, pour obtenir un moût de fermentation contenant 10 à 20 % en poids d'extrait sec qui est concentré jusqu'à une teneur en extrait sec comprise entre 50 et 70 % pour obtenir un concentrat qui est déshydraté afin d'isoler la composition.

L'opération de fermentation doit être conduite de telle manière que la concentration des réactifs principaux dans le milieu soit maintenue à des valeurs préalablement fixées. De cette manière, il est possible de contrôler non seulement la formation de la lysine mais aussi la formation de sous-produits provenant du métabolisme normal de la souche productrice ou même de ses déviations possibles et qui jouent un rôle important dans les propriétés de la composition finale.

Par ailleurs, pour obtenir la salification de la lysine au fur et à mesure de sa formation, il est particulièrement avantageux d'ajouter de l'acide sulfurique au cours de la fermentation soit en continu soit en additions successives. Pour des raisons de commodité, la salification peut être réalisée en ajoutant au milieu de fermentation le sulfate d'ammonium en présence d'ammoniac, ou l'ammoniac en présence d'acide sulfurique de façon à maintenir constante la teneur en ions ammonium et à contrôler le pH.

La durée de la fermentation est généralement comprise entre 30 et 100 heures, la fermentation étant arrêtée lorsque la concentration en substrat carboné et en substrat azoté assimilables devient assez faible, par exemple, lorsque la concentration en sucre résiduel devient inférieure à 2 g/litre. De cette manière la concentration du moût peut être entreprise sans aucune séparation préalable.

La teneur en extrait sec du moût de fermentation avant la concentration est comprise entre 10 et 20 % en poids.

Le moût de fermentation contenant de 10 à 20 % d'extrait sec est concentré selon les techniques habituelles dans des conditions de températures, de pression et de durée qui permettent la destruction des microorganismes vivants sans dégradation de la lysine. Par exemple, la concentration peut être réalisee dans un évaporateur à couches minces chauffé par de la vapeur à 130°C, la température du moût concentré pouvant atteindre 110-120°C.

La concentration est poursuivie jusqu'à ce que la teneur en extrait sec soit comprise entre 50 et 70 % en poids.

Le concentrat ainsi obtenu est ensuite déshydraté selon les techniques habituellement utilisées pour ce type d'opération, éventuellement après addition d'adjuvants pour faciliter la mise en forme du produit fini dans des conditions telles que les caractéristiques et la composition du produit ne soient pas sensiblement modifiées. Par exemple, la déshydratation peut être réalisée par atomisation, malaxage - granulation, séchage - écaillage, déshydratation azéotropique en présence d'un solvant convenable.

D'une manière générale, la déshydration est réalisée dans des conditions telles que le produit final ne soit pas dégradé. Par exemple, lorsque l'on met en oeuvre une distillation azéotropique, on mélange le moût concentré à un solvant compatible et acceptable du point de vue alimentaire puis effectue la distillation de préférence sous pression réduite. A cet effet, il est particulièrement utile d'utiliser comme solvant une huile paraffinique ayant des qualités alimentaires. La distillation azéotropique étant terminée, la composition déshydratée se trouve en suspension dans le solvant dont elle est séparée par filtration puis séchée.

Les caractéristiques de la composition préparée selon le procédé de l'invention sont déterminées en grande partie par la composition chimique du produit obtenu. Elles sont également influencées par la structure du solide obtenu au terme de l'opération de déshydratation.

Il est particulièrement avantageux de conduire le procédé de préparation de manière que le produit obtenu ait un taux de cristallinité voisin de 50 % (détermination par diffraction aux rayons X), une microporosité voisine de 0,3 cm³/gramme et une surface spécifique voisine de 0,5 m²/gramme.

Compte tenu du milieu de fermentation utilisé, la lysine se trouve dans le produit final sous forme de sulfate.

Quel que soit le procédé de déshydratation utilisé, le produit obtenu est directement utilisable pour l'incorporation dans l'alimentation des animaux.

Le produit obtenu selon le procédé de la présente invention se caractérise par une excellente stabilité. Après six mois de stockage à une température voisine de 25°C, la teneur en lysine du produit fini ne varie pas.

Le produit préparé selon le procédé de l'invention est particulièrement utile dans l'alimentation animale. Etant solide et en prenant pas en masse en présence d'humidité, il se mélange parfaitement aux aliments distribués aux animaux. Du fait de la stabilité du produit obtenu, les aliments complets peuvent être préparés longtemps avant leur emploi.

Les compositions alimentaires contenant le produit préparé selon le procédé de l'invention manifestent, tant sur le poulet que sur le porc, une efficacité équivalente à celle du chlorhydrate de lysine puriflé.

L'exemple suivant montre comment l'invention peut être mise en pratique.

### EXEMPLE

Dans un fermenteur de 20 litres muni d'un système d'agitation et d'aération, on place:
- eau .................... 3 litres
- extrait de maïs ........ 250 g
Le milieu est stérilisé par barbotage de vapeur à 120°C pendant 20 minutes. Après refroidissement à 35°C, le volume est ajusté à 5 litres par addition d'eau stérile.

On prépare alors, sous forme de solutions stériles:
- 8 litres d'une solution de glucose à 650 g/l
- 1 litre d'une solution de sulfate d'ammonium à 500 g/l
- 2 litres d'une solution d'ammoniaque à 15 % (p/v)
- 0,15 litre d'une solution de phosphate de leucine contenant 10 g de leucine
- 0,1 litre d'huile de soja
Le pH est ajusté à 7,30 par addition d'ammoniaque stérile.

Le fermenteur est ensemencé par 500 cm³ d'une culture inoculum réalisée dans un ballon de 2 litres en utilisant un milieu de culture analogue à celui décrit ci-dessus.

L'agitation est réglée à 500 tours/minute et l'aération à 600 litres/heure.

Le milieu de fermentation est alimenté par la solution de glucose de façon à avoir une teneur en glucose comprise entre 5 et 15 g/l; par la solution d'ammoniaque pour maintenir le pH à 7,30 et par la solution de sulfate d'ammonium de façon à avoir une concentration en ions ammonium comprise entre 1 et 5 g/l.

Le milieu de fermentation est alimenté par la solution de phosphate de leucine à raison de 3 cm³/heure et de façon intermittente en huile de soja afin de contrôler les mousses.

Après 50 heures de culture à 35°C, on récolte environ 12 litres d'un milieu contenant 70 g/litre de lysine exprimée en base lysine et 15 % en poids d'extrait sec.

Le moût contenant 15 % d'extrait sec est concentré sous pression réduite dans un évaporateur à couches minces chauffé par de la vapeur à 130°C. La température du milieu est maintenue au voisinage de 90°C. La concentration est poursuivie jusqu'à l'obtention d'un concentrat contenant 60 % en poids d'extrait sec.

Dans un ballon muni d'une agitation et contenant 2 litres d'une huile paraffinique dont le point d'ébullition est supérieur à 160°C, on ajoute le concentrat à 60 % d'extrait sec puis distille sous pression réduite (4 à 13,3 kPa) en séparant l'eau du condensat. On obtient finalement une suspension d'une poudre dans l'huile à une température voisine de 100°C.

La poudre est séparée par filtration puis séchée dans une étuve. On obtient ainsi 245 g de produit ayant les caractéristiques suivantes:
- poudre fine beige rosé à brun plus foncé
- densité apparente : 0,52
- teneur en lysine (sous forme de base) : 44 %
- composition centésimale :

| | |
|---|---|
| - matières sèches | environ 97 % |
| - protéines | 13 % |
| - huile, matières grasses | 1,2 % |
| - matières minérales | 3,8 % |
| - phosphore total | 0,35 % |
| - acides aminés totaux (en dehors de la lysine) | 2,5 % |
| - ions sulfates (exprimé en H₂SO₄) | 14,5 % |
| - eau | 1,2 % |

## Revendications

1. Procédé de préparation d'une composition pour l'alimentation animale contenant entre 35 et 48 %, exprimé en base, de lysine sous forme de sulfate, qui est solide et stable caractérisé en ce que l'on effectue la culture d'un microorganisme producteur de lysine dans un milieu qui contient au moins une source de carbone assimilable, choisie parmi le glucose, le saccharose et les hydrolysats d'amidon, telle que le rapport pondéral matières fermentescibles/matières sèches totales est supérieur à 80 %, à l'exclusion de l'acide acétique utilisé seul ou en mélange, et une source d'azote assimilable en maintenant la concentration de la source de carbone comprise entre 5 et 15 g/litre et la concentration en ions ammonium comprise entre 1 et 5 g/litre, en opérant à un pH de 7,3 et en salifiant la lysine sous forme de sulfate au fur et à mesure de sa formation, pour obtenir un moût de fermentation contenant 10 à 20 % en poids d'extrait sec que l'on concentre sans aucune séparation préalable jusqu'à une teneur en extrait sec comprise entre 50 et 70 % puis déshydrate le concentrat obtenu et isole la composition qui est directement utilisable pour l'incorporation dans l'alimentation des animaux.

## Claims

1. Process for preparing an animal feed composition containing between 35 and 48%, expressed as base, of lysine in the form of sulphate, which is solid and stable, characterized in that the culture of a lysine-producing microorganism is carried out in a medium which contains at least one assimilable carbon source, chosen from among glucose, saccharose and starch hydrolysates, such that the weight ratio of fermentable substances/total dry matter is greater than 80%, excluding acetic acid used alone or in a mixture, and an assimilable nitrogen source, while maintaining the concentration of the carbon source between 5 and 15 g/litre and the concentration of ammonium ions between 1 and 5 g/litre, working at a pH of 7.3 and salifying the lysine in the form of sulphate as it is formed, in order to obtain a fermentation must containing 10 to 20% by weight of dry extract which is concentrated without any separation beforehand to a dry extract content of between 50 and 70%, and the concentrate obtained is then dehydrated and the composition isolated, which composition can be used directly for incorporation into animal feed.

## Patentansprüche

1. Verfahren zur Herstellung eines Tierfuttermittels, das 35 bis 48%, ausgedrückt als Base, Lysin in Form des Sulfats, das fest und stabil ist, enthält, dadurch gekennzeichnet, daß man die Kultur eines Lysin produzierenden Mikroorganismus in einem Milieu ausführt, das zumindest eine assimilierbare Kohlenstoffquelle, ausgewählt aus Glucose, Saccharose und den Stärkehydrolysaten, derart, daß das Gewichtsverhältnis vergärbare Materialien/Gesamttrockensubstanz größer als 80% ist, ausgenommen Essigsäure, allein oder in Mischung verwendet, und eine assimilierbare Stickstoffquelle enthält, wobei man die Konzentration der Kohlenstoffquelle zwischen 5 und 15 g/Liter und die Konzentration an Ammoniumionen zwischen 1 und 5 g/Liter hält, indem man bei einem pH-Wert von 7,3 arbeitet und das Lysin bei seiner Bildung in die Form des Sulfats überführt, unter Bildung einer Fermentationsbrühe, die 10 bis 20 Gew.-% Trockenextrakt enthält und die man ohne irgendeine vorherige Trennung bis zu einem Trockenextraktgehalt zwischen 50 bis 70% einengt, worauf man das erhaltene Konzentrat entwässert und das Mittel isoliert, welches unmittelbar für das Einbringen in Tierfuttermittel geeignet ist.
